**Europäisches Patentamt**

**European Patent Office**

**Office européen des brevets**

(11) Veröffentlichungsnummer: **0 380 996**

**A1**

# (12) EUROPÄISCHE PATENTANMELDUNG

(21) Anmeldenummer: **90101195.7**

(22) Anmeldetag: **22.01.90**

(51) Int. Cl.5: **C01B 33/32**

(30) Priorität: **31.01.89 DE 3902751**

(43) Veröffentlichungstag der Anmeldung:
**08.08.90 Patentblatt 90/32**

(84) Benannte Vertragsstaaten:
**GR**

(71) Anmelder: **Henkel Kommanditgesellschaft auf Aktien**
**Henkelstrasse 67**
**D-4000 Düsseldorf 13(DE)**

(72) Erfinder: **Novotny, Rudolf, Dr.**
**Am Rittersberg 14**
**D-4000 Düsseldorf 13(DE)**
Erfinder: **Hoff, Alfred, Dr.**
**Wacholderstrasse 18**
**D-4130 Moers-Schwafheim(DE)**
Erfinder: **Schürtz, Jost, Dr.**
**Hintenmeiswinkeler Weg 14**
**D-5650 Solingen 1(DE)**

(54) **Verfahren zur hydrothermalen Herstellung von Natriumsilikatlösungen mit hohem SiO2:Na2O-Molverhältnis.**

(57) Offenbart wird ein Verfahren zur hydrothermalen Herstellung von Natriumsilikatlösungen mit hohem $SiO_2$ : $Na_2O$-Molverhältnis durch Umsetzung eines kristallinen Siliciumdioxids mit wäßriger Natriumhydroxidlösung, das dadurch gekennzeichnet ist,daß man als kristallines Siliciumdioxid einen bei Temperaturen von über 1100 °C bis zum Schmelzpunkt getemperten Quarz einsetzt und diesen getemperten Quarz mit wäßriger Natriumhydroxidlösung in einem Konzentrationsbereich von 10 bis 50 Gew.-% bei Temperaturen von 150 bis 300 °C und den diesen Temperaturen entsprechenden Drücken von gesättigtem Wasserdampf in einem geschlossenen Druckreaktor umsetzt.

Fig.

EP 0 380 996 A1

## Verfahren zur hydrothermalen Herstellung von Natriumsilikatlösungen mit hohem SiO$_2$:Na$_2$O-Molverhältnis

Die vorliegende Erfindung betrifft ein Verfahren zur hydrothermalen Herstellung von Natriumsilikatlösungen mit hohem SiO$_2$:Na$_2$O-Molverhältnis durch Umsetzung eines kristallinen Siliciumdioxids mit wäßrigen Natriumhydroxidlösungen.

Eine allgemeine Übersicht über die Herstellung von wäßrigen Natriumsilikatlösungen geben die Monographien Winnacker, Küchler, Chemische Technologie, Band 3, Anorganische Technologie II, 4. Auflage, 1983, S. 54-63 und Ullmanns Encyklopädie der technischen Chemie, Band 21, 4. Auflage, 1982, S. 409-412.

Von den unter der Bezeichnung "Wasserglas" bekannten Alkalimetallsilikaten finden für technische Zwecke am häufigsten Natriumsilikatlösungen - allgemein als Natriumwasserglas bezeichnet - Verwendung. Derartige Natronwassergläser weisen überwiegend einen Feststoffgehalt von etwa 30 bis 40 Gew.-% sowie ein Molverhältnis Siliciumdioxid zu Natriumoxid von 3,4 bis 3,5 : 1 auf. Die Herstellung von Natronwassergläsern im technischen Maßstab erfolgt im allgemeinen durch Zusammenschmelzen von Quarzsand und Soda in hierfür geeigneten Öfen bei Temperaturen im Bereich von 1 400 bis 1 500 °C. Die beim Abkühlen erstarrende Schmelze, das Festglas, wird anschließend in einem weiteren Verfahrensschritt unter Verwendung von Druck und erhöhten Temperaturen in Wasser gelöst und die erhaltene Lösung - je nach Qualitätsanforderung -gegebenenfalls filtriert.

Dieses Hochtemperatur-Schmelzverfahren ist jedoch sowohl apparativ als auch hinsichtlich der erforderlichen Energiemengen sehr aufwendig und führt weiterhin zu nicht unerheblichen Emissionen, wie Staub, Stickoxiden und Schwefeloxiden.

Neben diesem in der Technik hauptsächlich angewandten Hochtemperatur-Schmelzverfahren sind ferner hydrothermale Verfahren zur Herstellung wäßriger Natriumsilikatlösungen bekannt, die in einer Reihe von Patentanmeldungen beschrieben werden.

Diese Verfahren gehen zum einen von amorphem Siliciumdioxid aus, im wesentlichen also von Flugstäuben und natürlich vorkommenden amorphen Siliciumdioxid-Modifikationen.

Die hierbei erhaltenen Verfahrensprodukte sind durch die üblichen Verunreinigungen der Flugstäube und der natürlichen amorphen Siliciumdioxidverbindungen, die als Eingangsstoffe eingesetzt werden, nur von geringer Qualität und können somit nur eingeschränkt für technische Produkte verwendet werden.

Die DE-AS 28 26 432 betrifft ein Verfahren zur Herstellung von Wasserglaslösungen durch Umsetzung von Flugstäuben, die bei Gewinnung von Silicium bzw. von Ferrosilicium-Legierungen anfallen, mit wäßrigen Alkalimetallhydroxidlösungen bei erhöhten Temperaturen und anschließendem Filtrieren der enthaltenen Lösungen, das dadurch gekennzeichnet ist, daß man Flugstaub mit einer 6- bis 15-gew.-%igen wäßrigen Alkalimetallhydroxidlösung bei Temperaturen von 120 °C bis 190 °C und einem Druck von 2,9 bis 18,6 bar im Autoklaven behandelt, wobei das Gewichtsverhältnis von Alkalimetallhydroxidlösung zu festem Flugstaub 2 : 1 bis 5 : 1 beträgt. Die Verfahrensprodukte weisen ein Molverhältnis SiO$_2$ : Na$_2$O von 2,2 bis 4 : 1 auf. Die als Ausgangsstoffe eingesetzten Flugstäube weisen einen Siliciumgehalt von 89 bis 98 Gew.-% auf, der gemäß den Ausführungsbeispielen stets bei 90 Gew-% liegt; der Rest besteht aus Verunreinigungen.

Die DE-OS 26 09 831 betrifft ein Verfahren zur Aufbereitung von Siliciumdioxid enthaltenden umweltbelastenden Abfallflugstäuben aus der Siliciummetall- und Siliciumlegierungs-Herstellung zu Kieselsäuren oder Silikaten, das dadurch gekennzeichnet ist, daß die folgenden Verfahrensschritte I bis III kombiniert werden:

I Auflösen der Flugstäube in Alkalihydroxidlösungen unter Bildung von Alkalisilikatlösungen;

II Reinigung der Alkalisilikatlösungen von organischen Bestandteilen durch Behandlung mit Aktivkohle und oder Oxidationsmitteln und Abtrennung des nicht aufschließbaren Rückstandes von der Lösung;

III Umsetzung der Alkalisilikatlösungen mit anorganischen oder organischen Säuren und/oder deren Salzen zwecks weiterer Reinigung. Die auf diese Weise erhaltenen Alkalisilikatlösungen weisen im allgemeinen ein Molverhältnis SiO$_2$ : Na$_2$O im Bereich von 3,3 bis 5,0 : 1 auf.

Die DE-OS 26 19 604 betrifft ein Verfahren zur Herstellung von flüssigem Wasserglas aus amorphem Siliciumdioxid und Alkalihydroxid, das dadurch gekennzeichnet ist, daß Siliciumdioxidstaub in Form von Flugasche, die von den Abgasen von Ferrolegierungs-Industrien und anderen mit Siliciumöfen arbeitenden Industrien abgeschieden worden ist, Alkalihydroxid und Wasser in einem bestimmten Gewichtsverhältnis gemischt werden und daraufhin unter Umrühren auf eine Temperatur zwischen 75 und 100 °C gebracht werden, wonach die erzielte Flüssigkeit abgekühlt wird. Die als Ausgangsstoff für diese Wasserglasherstellung benutzten Siliciumdioxidstäube weisen im allgemeinen einen Siliciumdioxidgehalt von 94 bis 98 Gew.-% auf, der Rest besteht aus Verunreinigungen.

Die DE-AS 23 28 542 betrifft ein Verfahren zur Herstellung von Alkalimetallsilikaten durch Behandlung von Perlit mit einer Alkalilauge und hydrothermale Behandlung der erhaltenen Pulpe im Autoklav unter nachfolgender Filtration, das dadurch gekennzeichnet ist, daß man zur Behandlung des Perlits einer Alkalilösung mit einer Konzentration von 40 bis 140 g/l $Na_2O$ in einer Menge einsetzt, bei der das Verhältnis der Flüssigphase zur Festphase 0,7 bis 1,5 : 1 beträgt. Bei dem Perlit handelt es sich um ein im wesentlichen amorphes, glasartiges Berggestein vulkanischen Ursprungs, welches hauptsächlich aus (in Gew.-%): Siliciumdioxid 73, Aluminiumoxid 15 und sonstigen Oxiden 8 besteht.

Wie die vorstehenden Ausführungen zeigen, liefern die in der Patentliteratur beschriebenen, aus amorphem Siliciumdioxid erhaltenen Wassergläser stets nur Verfahrensprodukte mit minderen Eigenschaften, die einer weiteren Reinigung unterzogen werden müssen.

Der im folgenden beschriebene Stand der Technik betrifft Verfahren zur hydrothermalen Herstellung von Natriumsilikatlösungen aus kristallinem Siliciumdioxid, also Sand, und Natronlauge, die nach den Verfahren des Standes der Technik allerdings nur bis zu einem $SiO_2$ : $Na_2O$-Molverhältnis von weniger als 2,89 : 1 umgesetzt werden können.

Die DE-OS 30 02 857 betrifft ein Verfahren zur hydrothermalen Herstellung von Natriumsilikatlösungen mit einem Molverhältnis $SiO_2$ : $Na_2O$ von 1,03 bis 2,88 : 1 durch Umsetzung von Sand mit wäßriger Natriumhydroxidlösung unter Druck und bei erhöhten Temperaturen sowie nachfolgender Filtration, das dadurch gekennzeichnet ist, daß man die wäßrige Natriumhydroxidlösung einer Konzentration von 10 bis 50 Gew.-% mit einem Überschuß an Sand von bis zu 300 %, bezogen auf die Molverhältnisse von $SiO_2$ : $Na_2O$ im Ansatz, bei Temperaturen im Bereich von 150 bis 250 °C und den diesen Temperaturen entsprechenden Drücken von gesättigtem Wasserdampf umsetzt, und den nicht umgesetzten Sandüberschuß vollständig oder teilweise als Filtermedium für die gebildete Natriumsilikatlösung verwendet. Nach den Ausführungsbeispielen dieser Offenlegungsschrift wird allerdings maximal ein $SiO_2$ : $Na_2O$-Molverhältnis von 1,68 : 1 erreicht.

Die DE-OS 34 21 158 betrifft ein Verfahren zur hydrothermalen Herstellung von Natriumsilikatlösungen mit einem Molverhälntis $SiO_2$ : $Na_2O$ von 1,96 bis 2,17 durch Umsetzung von überschüssigem Sand mit wäßriger Natriumhydroxidlösung, das dadurch gekennzeichnet ist, daß man das einen Sandüberschuß und eine mit Prozeßwärme vorgeheizte wäßrige Natiumhydroxidlösung enthaltende Reaktionsgemisch in einem rotierenden, zylindrischen, geschlossenen Druckreaktor bis zum Erreichen eines bestimmten Molverhältnisses $SiO_2$ : $Na_2O$ umsetzt und daraufhin unter Verwendung des überschüssigen Sandes und gegebenenfalls eines zusätzlichen Filterhilfsmittels filtriert. In den Ausführungsbeispielen werden wäßrige Natriumsilikatlösungen mit einem Molverhältnis $SiO_2$ : $Na_2O$ von bis zu 2,27 : 1 offenbart.

Die DE-OS 33 13 814 betrifft ein Verfahren zur Herstellung einer klaren Lösung eines Natriumsilikats, dessen Molverhältnis Siliciumdioxid : Natriumoxid höchstens gleich 2,58 : 1 ist, durch Aufschluß von kristallinem Siliciumdioxid einer mittleren Korngröße zwischen 0,1 und 2 mm, bei dem eine wäßrige Lösung von Natriumhydroxid ein Bett aus Siliciumdioxid durchläuft, das in einem senkrechten rohrförmigen Reaktor ohne mechanische Bewegung ausgebildet und von oben nach unten mit Siliciumdioxid und der wäßrigen Lösung des Natriumhydroxids gespeist wird.

Die belgische Patentschrift 649 739 betrifft ein Verfahren und ein Gerät zur Herstellung von klaren Natriumsilikat-Laugen durch Auflösung eines kieselsäurehaltigen Materials bei hoher Temperatur und unter Druck in wäßriger Ätznatronlauge, das dadurch gekennzeichnet ist, daß das Produkt von dem überschüssigen kieselsäurehaltigen Material und/oder von den unlöslichen verunreinigten Stoffen mittels Filtrierelementen getrennt wird, die in der Nähe des Reaktorbodens angebracht sind, wobei die besagte Filtration vorteilhaft unter den Temperatur- und Druckbedingungen erfolgt, die den Reaktionsbedingungen sehr ähnlich sind. Die auf diese Weise erhaltenen wäßrigen Natriumsilikatlösungen besitzen ein Molverhältnis $SiO_2$ : $Na_2O$ von etwa 2,5 : 1.

Derartige hydrothermale Verfahren zur Herstellung von Natronwassergläsern aus Sand und Natronlauge werden auch zusammenfassend in den bereits vorstehend zitierten Monographien von Winnacker, Küchler und Ullmann erörtert. Bei Winnacker, Küchler heißt es hierzu ( Seiten 61 und 62), daß sich jedoch im Hydrothermalverfahren bei den üblicherweise angewendeten Temperaturen nur ein Natriumwasserglas mit einem Verhältnis $SiO_2/Na_2O$ von kleiner als 2,7 erzielen läßt. Ullmann erwähnt in diesem Zusammenhang, daß sich auf diese Weise nur Natriumsilikat-Lösungen mit Molverhältnissen $SiO_2/Na_2O$ bis herauf zu 2,5 : 1 gewinnen lassen (Seite 412, linke Spalte).

Aufgrund der vorstehend zitierten Literatur bestand somit ein direktes Vorurteil hinsichtlich der Gewinnung von Natriumsilikat-Lösungen mit höheren $SiO_2/Na_2O$-Molverhältnissen im Hydrothermalverfahren aus Sand, d.h. aus kristallinem $SiO_2$, und Natronlauge.

Der vorliegenden Erfindung liegt demgegenüber die Aufgabe zugrunde, ein Verfahren zur hydrothermalen Herstellung von Natriumsilikatlösungen durch Umsetzung eines kristallinen Siliciumdioxid mit wäßriger Natriumhydroxidlösung bereitzustellen, bei welchem Natriumsilikat-Lösungen mit Molverhältnissen

$SiO_2/Na_2O$ von mehr als 2,9 : 1 erzielt werden.

Die erfindungsgemäße Aufgabe wird durch den Einsatz eines speziell getemperten Quarzes erreicht, der unter speziellen Reaktionsbedingungen mit Natriumhydroxidlösungen umgesetzt wird.

Die vorliegende Erfindung betrifft somit ein Verfahren zur hydrothermalen Herstellung von Natriumsilikatlösungen mit hohem $SiO_2$ : $Na_2O$-Molverhältnis durch Umsetzung eines kristallinen Siliciumdioxids mit wäßriger Natriumhydroxidlösung, das dadurch gekennzeichnet ist,
daß man als kristallines Siliciumdioxid einen bei Temperaturen im Bereich von über 1100 °C bis zum Schmelzpunkt getemperten Quarz einsetzt und
diesen getemperten Quarz mit wäßriger Natriumhydroxidlösung in einem Konzentrationsbereich von 10 bis 50 Gew.-% bei Temperaturen von 150 bis 300 °C und den diesen Temperaturen entsprechenden Drücken von gesättigtem Wasserdampf in einem Druckreaktor umsetzt.

Das erfindungsgemäße Verfahren ist durch seine einstufige Verfahrensführung technisch einfacher zu handhaben und somit kostengünstiger als die technisch aufwendigen, große Energiemengen erfordernden und die Umwelt stark belastenden Verfahren des Standes der Technik, also die Hochtemperatur-Schmelzverfahren mit anschließendem Lösungsschritt.

Gegenüber den Hydrothermalverfahren des Standes der Technik besitzt das erfindungsgemäße Verfahren den Vorteil, daß durch den Einsatz des erfindungsgemäß speziell getemperten Quarzes auch Natriumsilikatlösungen mit einem Molverhältnis an $SiO_2$ : $Na_2O$ von mehr als 2,9 : 1 erhalten werden, was unter Verwendung von nicht getempertem Quarz als $SiO_2$-Komponente nicht möglich ist.

Weiterhin wurde überraschenderweise gefunden, daß aus auf diese Weise getempertem Quarz, vorzugsweise einem auf diese Weise gebildeten Cristobalit, im Rahmen einer Hydrothermalsynthese unter den vorstehend angegebenen Bedingungen schon bei kurzen Reaktionszeiten die direkte, einstufige Herstellung von wäßrigen Natriumsilikatlösungen möglich ist, die ein Molverhältnis $SiO_2$ : $Na_2O$ von mehr als 2,9 : 1 aufweisen.

Auch bei kurzen Reaktionszeiten läßt sich bei Anwendung des erfindungsgemäßen Verfahrens ein hoher Umsetzungsgrad der eingesetzten Reaktionsprodukte erzielen. Der Einsatz einer leicht löslichen kristallinen Siliciumdioxid-Modifikation erlaubt es, Natriumsilikatlösungen mit einem hohen Siliciumdioxid/Natriumoxid-Molverhältnis herzustellen, wobei dies in hohen Raum/Zeitausbeuten bei minimalem Energieverbrauch geschieht.

Vorzugsweise besitzen die so erhaltenen Natriumsilikatlösungen ein $SiO_2$ : $Na_2O$-Molverhältnis von 2,9 bis 3,7 : 1, besonders bevorzugt von 3,0 bis 3,6 : 1, und insbesondere von 3,3 bis 3,5 : 1.

Nach einer bevorzugten Ausführungsform der vorliegenden Erfindung erhält man die wäßrige Natriumsilikatlösung, indem man als kristallines Siliciumdioxid einen bei Temperaturen von 1200 bis 1700 °C unter Zusatz katalytischer Mengen an Alkali getemperten Quarz einsetzt, welcher sich unter diesen Temperbedingungen im wesentlichen in Cristobalit umwandelt, und daß man den so getemperten Quarz mit wäßriger Natriumhydroxidlösung in einem Konzentrationsbereich von 15 bis 30 Gew.-%, vorzugsweise 20 bis 30 Gew.-%, bei Temperaturen von 200 bis 250 °C und den diesen Temperaturen entsprechenden Drücken von gesättigtem Wasserdampf in einem geschlossenen Druckreaktor umsetzt.

Cristobalit ist, wie Quarz, eine Kristallmodifikation des Siliciumdioxid. Dieser wird praktisch ausschließlich synthetisch durch Calcinierung von Quarz hergestellt, indem man Quarzsand bei Temperaturen von ca. 1500 °C unter Zusatz von Katalysatoren (Alkaliverbindungen) kontinuierlich umwandelt. Bezüglich näherer Informationen zu Cristobalit wird auf Ullmanns Encyklopädie der technischen Chemie, Band 21, 4. Auflage, 1982, S. 439-442 verwiesen.

Im Sinne der Erfindung ist es daher besonders bevorzugt, als kristallines Siliciumdioxid einen bei Temperaturen im Bereich von 1300 °C bis 1600 °C unter Zusatz katalytischer Mengen an Alkali getemperten Quarz einzusetzen, der sich unter diesen Bedingungen im wesentlichen in Cristobalit umwandelt. Besonders vorteilhaft ist es ferner, ein frisch getempertes, noch warmes Cristobalit-Material für das erfindungsgemäße Verfahren zu verwenden.

Nach einer weiteren bevorzugten Ausführungsform des erfindungsgemäßen Verfahrens führt man die Umsetzung im Reaktor durch, indem man einen Überschuß an getempertem Quarz von bis zu 100 Mol-%, vorzugsweise 1 bis 10 Mol-%, bezogen auf die gewünschten Soll-$SiO_2$ : $Na_2O$-Molverhältnisse in der Natriumsilikatlösung, einsetzt. Generell läßt sich die Umsetzung auch mit höheren Überschüssen als 100 Mol-% an getempertem Quarz durchführen; dies ist jedoch im allgemeinen technisch nicht sinnvoll. Im Sinne der Erfindung ist es besonders bevorzugt, die Umsetzung mit einem Überschuß von 2 bis 5 Mol-% an getempertem Quarz, bezogen auf das gewünschte $SiO_2$ : $Na_2O$-Molverhältnis, durchzuführen.

Zur Durchführung des erfindungsgemäßen Verfahrens können generell alle für die Hydrothermalsynthese von Natronwasserglas gebräuchlichen Reaktoren Verwendung finden. Hierzu gehören z.B. rotierende Löser, stehende Löseranordnungen, Reaktoren mit Rührwerk, Strahlschlaufenreaktoren, Rohrreaktoren und

EP 0 380 996 A1

im Prinzip alle Reaktoren, die zur Umsetzung von Feststoffen mit Flüssigkeiten unter Druck geeignet sind. Derartige Reaktoren sind beispielsweise in der DE OS 30 02 857, DE-OS 34 21 158, DE-AS 28 26 432, BE-PS 649 739, DE-OS 33 13 814 und der DE-PS 968 034 ausführlich beschrieben.

Die in der erfindungsgemäßen Weise hergestellten Natriumsilikat-Lösungen (Natronwasserglas-Lösungen) können für alle üblichen Verwendungszwecke eingesetzt werden, die dem Fachmann bekannt sind und in der einschlägigen Literatur beschrieben werden, beispielsweise für die Herstellung von Füllstoffen (gefällten Kieselsäuren), als Klebstoffe, als Bindemittel in Farben, Gießereihilfsstoffen, Katalysatorträgern, als Komponente in Wasch- und Reinigungsmitteln, sowie als Bestandteil für feuerfeste Materialien.

Die Erfindung wird im folgenden durch Beispiele näher erläutert. Die Beispiele erfolgten im Laboratoriums-Maßstab und im technischen Maßstab. Als getemperter Quarz wurde in den Ausführungsbeipielen ein durch Tempern bei 1300 bis 1600 °C und Alkalikatalyse erhaltener Cristobalit verwendet.

Für die Laboratoriumsversuche wurde ein zylindrischer Autoklav eingesetzt, der von außen durch einen Wärmeträger auf Reaktionstemperatur aufgeheizt wurde. Die Ergebnisse dieser Beispiele sind in den nachfolgenden Tabellen 1 und 2 zusammengefaßt.

Als Reaktor für die Durchführung der Versuche im technischen Maßstab diente ein waagerecht angeordneter zylindrischer Druckbehälter aus Stahl mit einer Nickelauskleidung mit einem Leervolumen von ca. 24 m³. Der Druckbehälter drehte sich mit einer Drehzahl von 6 UpM um eine horizontale Achse. Die Beheizung erfolgte mit Dampf von 20 bzw. 25 bar über eine Öffnung in der Achse und ein angesetztes Rohr mit einer wirkungsvollen Verteilung direkt in den Reaktionsbehälter hinein.

Das für die Beispiele verwendete kristalline $SiO_2$, der aus getempertem Quarz erhaltene Cristobalit, enthielt > 99,0 Gew.-% $SiO_2$.

Die für den Prozeß benötigte wäßrige Natriumhydroxidlösung (Natronlauge) wurde über eine Venturi-Düse oberhalb des Natronlauge-Vorratsbehälters mit Brüden aus der Vorcharge auf etwa 103 °C aufgeheizt.

Die Stoffmengen (Cristobalit/Natronlauge) wurden über Wägevorrichtungen erfaßt. Die Rohstoffe wurden in den Reaktor eingefüllt, dieser dann verschlossen und in Rotation versetzt. Durch direktes Einleiten von Dampf wurde das Reaktionsgemisch auf die Reaktionstemperatur von ca. 215 °C aufgeheizt und bei dieser Temperatur belassen. Nach einer Reaktionszeit von 30 min bei dieser Temperatur wurde der Reaktor zum Stillstand gebracht und das Reaktionsgemisch über eine angeflanschte Rohrleitung mittels seines Eigendruckes in einen Ausblasebehälter überführt. Auf diesem Wege wurde das Reaktionsgemisch dann über einen Zyclonabscheider in Brüden und etwa 105 °C heiße Wasserglaslösung getrennt. Die Brüden wurden von einem Strahlapparat angesaugt und zur Vorwärmung der Mischlauge des nächsten Ansatzes in einer Venturi-Düse bis zur Grenze der Siedetemperatur der Lauge von etwa 103 °C verwendet.

Die weitere Aufarbeitung der ca. 100 °C heißen Wasserglaslösung wurde entweder über einen Sedimentationsbehälter zur groben Abtrennung von Feststoffen oder - bei höheren Ansprüchen an die Klarheit der Lösung - über ein Filter vorgenommen.

Die hergestellten Natriumsilikatlösungen wurden bezüglich ihres $SiO_2$- und $Na_2O$-Gehaltes analysiert.

Als Reaktionsbedingungen wurden im technischen Maßstab die Bedingungen des Beispiels 4 gewählt. Die Ansatzgröße betrug 24 000 kg. Die erhaltene ca. 41 %ige Natronwasserglaslösung hatte ein $SiO_2$ : $Na_2O$-Molverhältnis von 3,4 : 1 und entsprach praktisch dem Ergebnis des Versuches im Laboratoriumsmaßstab.

In einer besonderen Ausführungsform kann der Hydrothermal-Prozeß unter Einsatz von Cristobalit/NaOH-Lösung bei relativ hohen Feststoffkonzentrationen im Reaktor ablaufen, da auch bei hohem $SiO_2$ : $Na_2O$-Molverhältnis unter Reaktionsbedingungen (215 °C/20 bar) die Natriumsilikatlösung einen für den Prozeß ausreichenden Viskositätsbereich aufweist. Nach Abschluß der Reaktion kann dann entweder
- unter Druck direkt in den Reaktor oder
- in die Ausblaseleitung zu einem Vorlagebehälter während der Ausblasevorgangs
zusätzlich Wasser eingespeist werden, so daß die über die Ausblaseleitung in den Vorlagebehälter gelangte Natriumsilikatlösung in der Weise ausreichend verdünnt wird, daß in der Vorlage bei Temperaturen von ca. 100 °C die Natriumsilikatlösung vor der weiteren Aufarbeitung durch Sedimentation oder Filtration eine fließfähige, ausreichend niedrigviskose Konsistenz aufweist.


Beispiel 1

Beispiel 1 belegt einen in Hinblick auf die relativ niedrige Ansatzlaugenkonzentration günstigen Ansatz bei stöchiometrischem Cristobaliteinsatz, bezogen auf ein zu erzielendes Sollverhältnis $SiO_2$ : $Na_2O$ in der Natriumsilikatlösung von 3,46 : 1.

5

Beispiel 2

Eine erhöhte NaOH-Konzentration im Ansatz wurde gegenüber Beispiel 1 bei vergleichbaren Reaktionszeiten eingestellt, um den Einfluß der NaOH-Konzentration auf Reaktionsgeschwindigkeit und erzielbares $SiO_2$ : $Na_2O$-Verhältnis zu ermitteln.

Beispiel 3/4

Um ein höheres Molverhältnis $SiO_2$ : $Na_2O$ in der Reaktionslösung zu erzielen, wurde gegenüber Beispiel 1, bezogen auf das Sollverhältnis von 3,46 : 1, ein steigender Überschuß (+ 3 % / + 5 %) von Cristobalit eingesetzt.

Beispiel 5/6

Bei einem Cristobalitüberschuß von 5 %, bezogen auf ein Sollverhältnis $SiO_2$ : $Na_2O$ von 3,46 : 1 wurden die Reaktionszeiten verlängert.

Tabelle 1

| Ansatzverhältnisse | | | | |
|---|---|---|---|---|
| Beispiel Nr. | Einsatzstoffe- und -mengen | | % NaOH-Konzentration | Molverhältnis Cristobalit : $Na_2O$ im Ansatz[3] |
| | Cristobalit (g) | Natronlauge (g) | | |
| 1 | 49 | 94,02 | 20,0 | 3,46 : 1 |
| 2 | 49 | 62,68 | 30,0 | 3,46 : 1 |
| 3[1] | 49 | 91,28 | 20,0 | 3,56 : 1 |
| 4[2] | 49 | 89,54 | 20,0 | 3,63 : 1 |
| 5[2] | 49 | 89,54 | 20,0 | 3,63 : 1 |
| 6[2] | 49 | 89,54 | 20,0 | 3,63 : 1 |

[1] Cristobalitüberschuß 3 %, bezogen auf ein angestrebtes Molverhältnis $SiO_2$ : $Na_2O$ in der Lösung von 3,46 : 1

[2] Cristobalitüberschuß 5 %, bezogen auf ein angestrebtes Molverhältnis $SiO_2$ : $Na_2O$ in der Lösung von 3,46 : 1

[3] unter Berücksichtigung aller im Reaktor vorliegenden $SiO_2$- und $Na_2O$- Komponenten

Tabelle 2

| Reaktionsbedingungen und Produktcharakterisierung | | | | | |
|---|---|---|---|---|---|
| Beispiel Nr. | HT-Reaktionsbedingungen | | Natriumsilikatlösung[*1] | | Molverhältnis SiO$_2$ / Na$_2$O |
| | Reaktionszeit (min) | Reaktionstemp. (°C) | % SiO$_2$ | % Na$_2$O | |
| 1 | 30 | 215 | 33,22 | 10,31 | 3,32 : 1 |
| 2 | 30 | 215 | 43,07 | 13,17 | 3,37 : 1 |
| 3 | 30 | 215 | 33,66 | 10,24 | 3,39 : 1 |
| 4 | 30 | 215 | 33,78 | 10,22 | 3,41 : 1 |
| 5 | 60 | 215 | 34,14 | 10,17 | 3,46 : 1 |
| 1 | 120 | 215 | 37,27 | 10,15 | 3,48 : 1 |

[*1] Zusammensetzung des Endproduktes im Reaktor.
Vor der Filtration erfolgt Verdünnung auf Feststoffgehalt von < 41 % Feststoff in der Natriumsilikatlösung.
(HT steht für "hydrothermal")

Beispiel 7

Um den Einfluß der Temperungstemperatur des Quarzes auf die Produkteigenschaft der hergestellten wäßrigen Natriumsilikatlösungen nachzuweisen, wurde Quarz unter Zusatz katalytischer Mengen an Alkali bei Temperaturen von 850°C bis 1600 °C zunächst getempert und daraufhin hydrothermal mit Natriumhydroxidlösung umgesetzt. Als Vergleich wurde unbehandelter Quarz in dem gleichen Standardversuch der hydrothermalen Umsetzung mit Natriumhydroxidlösung zu Natronwasserglas umgesetzt.

Bei dem Standardversuch der hydrothermalen Umsetzung des getemperten Quarzes mit Natriumhydroxidlösung wurden als Versuchsbedingungen gewählt:
Reaktionstemperatur 215 °C;
Reaktionszeit 30 min;
Natriumhydroxid-Konzentration 20 Gew.-%;
Überschuß an Siliciumdioxid 5 % (bezogen auf das Molverhältnis von 3,46 : 1 bei Natronglas)

Die Umsetzung dieses getemperten Quarzes in Natronlauge zu einem Natronwasserglas wurde mit nachstehend aufgelisteten Mengen der Ausgangsstoffe durchgeführt und führte zu den nachstehend tabellarisch wiedergegebenen Umsätzen und Molverhältnissen.

| Umsetzung von getempertem Sand in Natronlauge zu Na-Glas, Molverhältnis SiO$_2$/Na$_2$O = 3,46 : 1 | |
|---|---|
| für Na-Glas | Mengen |
| 35,37 % getemperter Sand | 49,00 g |
| 25,85 % NaOH, 50 %ig | 35,82 g |
| 38,78 % Wasser | 53,72 g |

|  | % Umsatz | % SiO$_2$ | % Na$_2$O | Gew.-Verh. | Mol-Verh. |
|---|---|---|---|---|---|
| Theor. Mengen: |  | 35,19 | 10,00 | 3,5:1 | 3,63:1 |
| unbeh. Sand (Vgl.) | 58,73 | 24,20 | 11,71 | 2,07:1 | 2,13:1 |
| 850 °C Sand | 48,11 | 20,74 | 12,25 | 1,69:1 | 1,75:1 |
| 850 °C Sand* | 49,18 | 21,10 | 12,20 | 1,73:1 | 1,78:1 |
| 950 °C Sand | 42,60 | 18,81 | 12,55 | 1,50:1 | 1,55:1 |
| 950 °C Sand* | 48,00 | 20,70 | 12,26 | 1,69:1 | 1,74:1 |
| 1100 °C Sand* | 57,50 | 23,82 | 11,77 | 2,02:1 | 2,09:1 |
| 1300 °C Sand* | 86,81 | 32,05 | 10,49 | 3,05:1 | 3,15:1 |
| 1600 °C Sand* | 90,30 | 32,91 | 10,36 | 3,18:1 | 3,28:1 |
| Cristobalit | 93,92 | 33,78 | 10,22 | 3,30:1 | 3,41:1 |

(* = unter Zusatz katalytischer Mengen an Alkali)

Die Ergebnisse zeigen, daß ein bei Temperaturen von über 1100 °C getemperter Quarz, insbesondere ein Quarz, der bei Temperaturen von 1300 °C und höher getempert worden ist, in überraschender Weise zu einem höheren Umsatz der kristallinen SiO$_2$-Komponente und somit zu einem höheren Molverhältnis der Natriumsilikatlösung führt, als der entsprechende unbehandelte Sand.

Beispiel 8

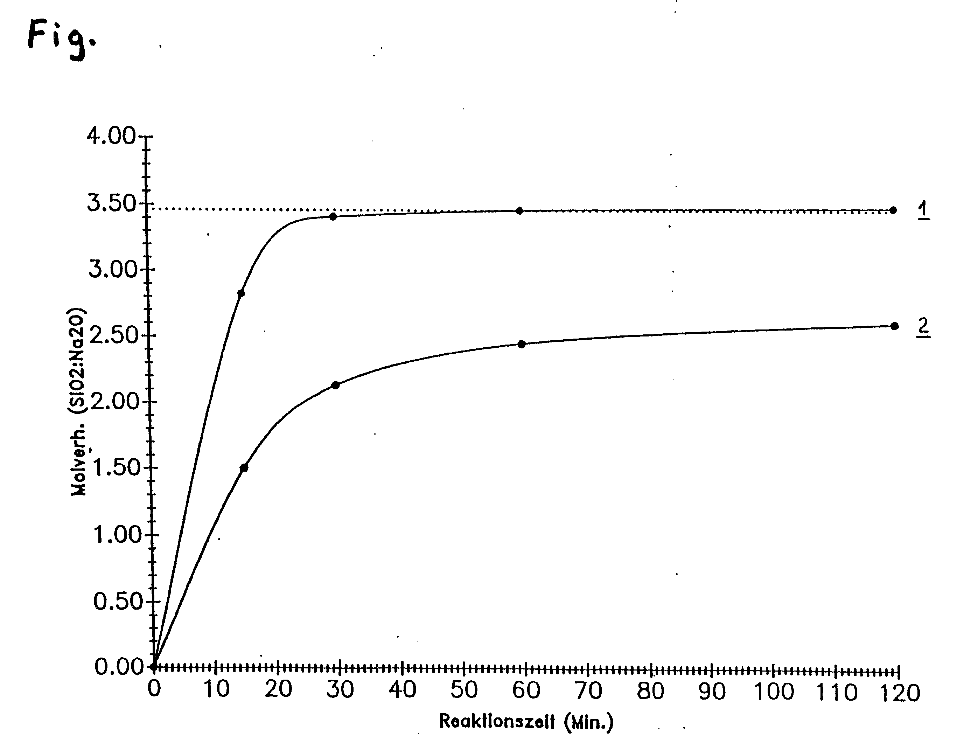

Der Effekt der schnelleren Umsetzung von bei hohen Temperaturen getempertem Quarz, dem Cristobalit, im Vergleich zu einem ungetemperten Quarz, ist in der Figur dokumentiert. Diese Figur zeigt das Ergebnis der Umsetzung von getempertem Quarz, d.h. Cristobalit, zusammen mit 20 Gew.-%iger Natriumhydroxidlösung bei einem 5 %igen Siliciumdioxidüberschuß, bezogen auf ein Molverhältnis von 3,46 : 1, in einem Druckbehälter bei 215 °C und bei Reaktionszeiten von 15, 30, 60 und 120 min. Es wurde hierbei jeweils das Molverhältnis Siliciumdioxid : Natriumoxid ermittelt. Dieser Kurvenverlauf trägt die Bezugsziffer 1.

Zum Vergleich wurde ein thermisch nicht behandelter Quarz, also ein Sand, unter den oben beschriebenen Reaktionsbedingungen umgesetzt und wiederum nach den oben beschriebenen Reaktionszeiten Proben entnommen, um das Molverhältnis zu bestimmen. Diese Kurve ist mit der Bezugsziffer 2 versehen.

Aus der Figur ergibt sich klar, daß bei dem erfindungsgemäßen Herstellungsverfahren, bei dem ein getemperter Quarz eingesetzt wird, bereits nach 15 min eine Umsetzung von über 80 % erfolgt ist und die Umsetzung selbst nach 30 min Reaktionszeit quasi quantitativ ist.

Bei der Vergleichskurve gemäß Bezugsziffer 2 hingegen ergibt sich nach 15 min erst eine Umsetzung von ca. 40 bis 50 %, und selbst nach einer Reaktionszeit von 120 min erreicht man maximal einen Umsetzungsgrad von nur 70 %, wobei - in Übereinstimmung mit den Literaturangaben - auch nach mehreren Stunden nur ein maximales Molverhältnis SiO$_2$/Na$_2$O von 2,8 : 1 erzielbar ist.

Dies zeigt treffend die durch das Tempern des Quarzsandes bei hoher Temperatur hervorgerufenen Vorteile des erfindungsgemäßen Herstellungsverfahrens.

Ansprüche

1. Verfahren zur hydrothermalen Herstellung von Natriumsilikatlösungen mit hohem SiO$_2$ : Na$_2$O-Molverhältnis durch Umsetzung eines kristallinen Siliciumdioxids mit wäßriger Natriumhydroxidlösung, dadurch gekennzeichnet, daß man als kristallines Siliciumdioxid einen bei Temperaturen im Bereich von über 1100 °C bis zum Schmelzpunkt getemperten Quarz einsetzt und diesen getemperten Quarz mit wäßriger Natriumhydroxidlösung in einem Konzentrationsbereich von 10 bis 50 Gew.-% bei Temperaturen von 150 bis 300 °C und den diesen Temperaturen entsprechenden Drücken von gesättigtem Wasserdampf in einem geschlossenen Druckreaktor umsetzt.

2. Verfahren nach Anspruch 1, dadurch gekennzeichnet, daß die erhaltene Natriumsilikatlösung ein SiO$_2$ : Na$_2$O-Molverhältnis von 2,9 bis 3,7 : 1, vorzugsweise 3,0 bis 3,6 : 1, besonders bevorzugt 3,3 bis 3,5 : 1, aufweist.

3. Verfahren nach Ansprüchen 1 oder 2, dadurch gekennzeichnet, daß man als kristallines Siliciumdioxid einen bei Temperaturen von 1200 bis 1700 °C unter Zusatz katalytischer Mengen an Alkali getemperten Quarz einsetzt, welcher sich unter diesen Bedingungen im wesentlichen in Cristobalit umwandelt, und daß man den so getemperten Quarz mit wäßriger Natriumhydroxidlösung in einem Konzentrationsbereich von 15 bis 30 Gew.-%, vorzugsweise 20 bis 30 Gew.-%, bei Temperaturen von 200 bis 250 °C und den diesen Temperaturen entsprechenden Drücken von gesättigtem Wasserdampf in einem geschlossenen Druckreaktor umsetzt.

4. Verfahren nach einem der Ansprüche 1 bis 3, dadurch gekennzeichnet, daß man als kristallines Siliciumdioxid einen bei Temperaturen im Breich von 1300 bis 1600 °C unter Zusatz katalytischer Mengen an Alkali getemperten Quarz einsetzt, welcher sich unter diesen Bedingungen im wesentlichen in Cristobalit umwandelt.

5. Verfahren nach einem der Ansprüche 1 bis 4, dadurch gekennzeichnet, daß man die Umsetzung mit einem Überschuß an getempertem Quarz von bis zu 100 Mol-%, vorzugsweise 1 bis 10 Mol-% und insbesondere 2 bis 5 Mol-%, bezogen auf das Soll-$SiO_2$ : $Na_2O$-Molverhältnis in der Natriumsilikatlösung, durchführt.

Fig.

EP 0 380 996 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN Band 6, Nr. 202 (C-129)(1080) 13. Oktober 1982; & JP - A - 57 111 232 (DOUKAI KAGAKU KOGYO K.K.) 07.07.1982 --- | 1 | C 01 B 33/32 |
| A | GB-A-2 078 701 (STEIRISCHE MAGNESIT-INDUSTRIE AG) * Seite 1, Zeile 88 - Seite 2, Zeile 8 * --- | 1 | |
| A | FR-A-2 541 667 (PCUK) * Ansprüche 1-4 *; & DE - A - 33 13814 (Kat. D) --- | 1 | |
| A | FR-A-2 525 204 (PCUK) * Ansprüche 1-9 *; & DE - A - 33 13814 (Kat. D) --- | 1 | |
| A | EP-A-0 164 073 (HENKEL) * Anspruch 1 * ----- | 1 | |

**RECHERCHIERTE SACHGEBIETE (Int. Cl.5)**

C 01 B 33/00

Der vorliegende Recherchenbericht wurde für alle Patentansprüche erstellt

| Recherchenort | Abschlußdatum der Recherche | Prüfer |
|---|---|---|
| BERLIN | 15-04-1990 | CLEMENT J.P. |